(19) Europäisches Patentamt
European Patent Office
Office européen des brevets

(11) **EP 2 498 996 B1**

(12) **FASCICULE DE BREVET EUROPEEN**

(45) Date de publication et mention
de la délivrance du brevet:
**06.05.2015 Bulletin 2015/19**

(21) Numéro de dépôt: **10774237.1**

(22) Date de dépôt: **10.11.2010**

(51) Int Cl.:
***B41J 19/14*** *(2006.01)*     ***G06F 3/033*** *(2013.01)*

(86) Numéro de dépôt international:
**PCT/EP2010/067218**

(87) Numéro de publication internationale:
**WO 2011/058061 (19.05.2011 Gazette 2011/20)**

(54) **DISPOSITIF PORTABLE ET PROCEDE D'IMPRESSION D'UNE IMAGE, SUPPORT D'ENREGISTREMENT D'INFORMATION, STYLO ET BORNE POUR CE DISPOSITIF**

TRAGBARE VORRICHTUNG UND VERFAHREN ZUM DRUCKEN EINES BILDES, DATENTRÄGER, STIFT UND MARKSTEIN FÜR DIESE VORRICHTUNG

PORTABLE DEVICE AND METHOD FOR PRINTING AN IMAGE, DATA STORAGE MEDIUM, PEN AND BENCH MARK FOR SAID DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **12.11.2009 FR 0957976**

(43) Date de publication de la demande:
**19.09.2012 Bulletin 2012/38**

(73) Titulaire: **COMMISSARIAT A L'ENERGIE ATOMIQUE ET AUX ENERGIES ALTERNATIVES 75015 Paris (FR)**

(72) Inventeurs:
• **AUBOUY, Miguel
  F-38000 Grenoble (FR)**
• **CATTIN, Viviane
  F-38120 Saint-Egrève (FR)**

(74) Mandataire: **Colombo, Michel et al
Brevinnov
310 avenue Berthelot
69008 Lyon (FR)**

(56) Documents cités:
**WO-A1-01/30589        WO-A2-2004/015980
DE-A1-102005 003 333**

**Description**

L'invention concerne un dispositif portable et un procédé d'impression d'une image dans une zone d'impression aménagée sur un support matériel. L'invention a également pour objet un support d'enregistrement d'informations, un stylo et une borne pour la mise en oeuvre de ce procédé d'impression.

L'invention concerne en particulier des dispositifs d'impression « sans-contact », c'est-à-dire des dispositifs dans lesquels la tête d'impression ne vient pas directement en contact mécanique avec le support sur lequel on imprime.

Des dispositifs d'impression comprennent :

- au moins un stylo équipé d'une tête d'impression déplaçable manuellement dans la zone d'impression,
- une unité de mesure de la position de la tête d'impression,
- une unité de commande de la tête d'impression apte à commander l'impression sur le support d'un point de l'image déterminé.

Par exemple, un tel dispositif est divulgué dans la demande de brevet US 5 861 877. Dans ce premier dispositif connu, la position du stylo est mesurée à l'aide d'un accéléromètre ou d'un capteur de position similaire. La position du stylo est donc mesurée par rapport à son point de départ.

Pour que l'image soit correctement imprimée, cela suppose que le point de départ du stylo soit correctement positionné par rapport au support sur lequel l'image doit être imprimée. Cette opération peut se révéler fastidieuse à réaliser manuellement.

De plus, une fois que le processus d'impression est commencé, celui-ci doit être mené jusqu'au bout. En effet, si le stylo est retiré du support alors que l'impression de l'image n'est pas terminée, cette impression ne pourra être reprise qu'en positionnant très précisément le stylo sur le même point de départ que celui précédemment utilisé. Il n'est pas possible de reprendre l'impression de l'image en un point quelconque de la zone d'impression.

Parallèlement à ce premier dispositif, dans une demande de brevet US 6 808 330, il a déjà été proposé un second dispositif d'impression dans lequel la position du stylo est mesurée en incorporant des étiquettes de position à l'intérieur du support. Lorsque le stylo passe au-dessus de l'une de ces étiquettes, il la lit pour déterminer sa position par rapport au support. Toutefois, ce second dispositif ne permet pas d'imprimer une image sur un support quelconque dépourvu d'étiquette de position.

D'autres dispositifs d'impression, tels que ceux décrits dans les demandes de brevets DE10 2005 003 333 ou WO2004/015980, utilisent des bornes pour repérer la position du stylo. Toutefois, ces dispositifs ne permettent pas une impression véritablement « sans-contact » sur le support. Par exemple, ils ne peuvent pas être utilisés pour imprimer une image sur un support souple ou fragile qui peut se déformer ou se déchirer par simple contact mécanique avec une partie du stylo. D'autre part, rien n'est prévu dans ces dispositifs pour éviter des distances d'impression incorrectes.

L'invention vise à remédier à au moins l'un de ces inconvénients.

Elle a donc pour objet un dispositif portable d'impression dans lequel :

- le dispositif comprend au moins une borne repère amovible positionnable manuellement sur le support et associée à un point correspondant de l'image à imprimer par une relation prédéfinie indépendante de la position de cette borne repère sur le support,
- l'unité de mesure est apte à mesurer la position de la tête d'impression par rapport à la borne repère, et
- l'unité de commande est apte à déterminer le point de l'image à imprimer en fonction :

  • de la position mesurée actuelle de la tête d'impression par rapport à la borne repère, et
  • de la relation prédéfinie qui associe un point de l'image à cette borne, et.

- l'unité de commande est apte à déterminer la distance qui sépare le stylo du support à partir de la mesure de la position de la tête d'impression et à inhiber l'impression de l'image sur le support si cette distance est supérieure à un seuil prédéterminé.

Le positionnement d'au moins une borne repère sur le support et la mesure de la position du stylo par rapport à cette borne repère permet de localiser le stylo dans un référentiel solidaire de cette borne repère. La position mesurée est donc indépendante du point de départ du stylo. Il n'est alors pas nécessaire, dans le dispositif ci-dessus, de positionner le stylo sur un point de départ précis. Il est également possible de reprendre le processus d'impression en un point quelconque de la zone d'impression lorsque l'impression a été interrompue.

La borne repère est mécaniquement indépendante du support. Le dispositif ci-dessus permet donc de réaliser une impression sur un support quelconque.

Enfin, les impressions incorrectes liées à une distance trop grande entre le stylo et le support sont évitées.

Les modes de réalisation du dispositif d'impression ci-dessus peuvent comporter une ou plusieurs des caractéristiques suivantes :

  ▪ l'unité de mesure est également apte à mesurer l'orientation de la tête d'impression par rapport à la borne repère et l'unité de commande est également apte à commander la tête d'impression en fonction de cette orientation mesurée ;

- le dispositif comprend :

  - au moins deux bornes repères,
  - l'unité de mesure est apte à mesurer la distance entre ces deux bornes repères, et
  - l'unité de commande est apte à déterminer le point de l'image à imprimer en fonction en plus de la distance mesurée entre ces deux bornes repères pour étirer ou rétrécir l'image proportionnellement à cette distance ;

- - le dispositif comprend au moins une borne relais positionnable manuellement indépendamment de la borne repère, cette borne relais n'étant pas associée à un point de l'image par une relation prédéfinie indépendante de sa position par rapport au support, et l'unité de mesure comprend aussi :

  - un capteur de la position du stylo dans un référentiel solidaire de cette borne relais,
  - un capteur de la position de la borne relais par rapport à la borne repère, et
  - un convertisseur de la position mesurée du stylo exprimée dans le référentiel solidaire de la borne relais en une position relative à la borne repère ;

- l'unité de mesure comprend :

  - au moins un capteur de champ magnétique et au moins une source de champ magnétique, l'un du capteur et de la source de champ magnétique étant logé dans le stylo tandis que l'autre est logé dans la borne repère ou la borne relais, et
  - un déterminateur de la position de la tête d'impression par rapport à la borne repère ou relais à partir des mesures, réalisées par le capteur, du champ magnétique rayonné par la source de champ magnétique ;

- le capteur de champ magnétique est un capteur triaxe de champ magnétique et la source de champ magnétique est une source triaxe de champ magnétique ;
  - l'unité de mesure comprend :

  - au moins un émetteur et un récepteur d'une onde apte à se propager entre le stylo et la borne repère ou relais, l'un de cet émetteur et de ce récepteur étant logé dans le stylo tandis que l'autre est logé dans la borne repère ou relais, et
  - un déterminateur de la position de la tête d'impression par rapport à la borne repère ou relais à partir du temps de propagation de l'onde entre l'émetteur et le récepteur.

Ces modes de réalisation du dispositif présentent en outre les avantages suivants :

- la prise en compte de l'orientation de la tête d'impression par rapport à la borne repère pendant l'impression permet d'augmenter la qualité de l'impression,
- utiliser au moins deux bornes repères et mesurer la distance entre ces deux bornes repères permet d'étirer ou de rétrécir l'image imprimée proportionnellement à cette distance mesurée,
- utiliser une borne relais permet d'augmenter les dimensions de la zone d'impression sans augmenter la puissance des signaux utilisés pour mesurer la position du stylo,
- utiliser un capteur de champ magnétique et une source de champ magnétique permet de mesurer précisément la position du stylo par rapport à la borne repère,
- utiliser un capteur et une source triaxes de champ magnétique permet de mesurer à l'aide du même capteur et de la même source à la fois la position et l'orientation du stylo par rapport à la borne,
- l'utilisation d'un émetteur et d'un récepteur permet de mesurer la position du stylo à partir de temps de propagation d'une onde et donc d'obtenir une mesure précise.

L'invention a également pour objet un procédé d'impression d'une image dans une zone d'impression aménagée sur un support matériel à l'aide d'une tête d'impression logée dans un stylo déplaçable manuellement dans la zone d'impression pour imprimer sur le support un point déterminé de l'image et dans lequel le procédé comprend :

- le positionnement manuel d'au moins une borne repère amovible sur le support, cette borne repère étant associée à un point correspondant de l'image à imprimer par une relation prédéfinie indépendante de la position de cette borne sur le support,
- la mesure de la position de la tête d'impression par rapport à la borne repère,
- la détermination du point de l'image à imprimer en fonction :

  - de la position mesurée actuelle de la tête d'impression par rapport à la borne repère, et
  - de la relation prédéfinie qui associe un point de l'image à cette borne.

- la commande de la tête d'impression pour imprimer sur le support le point déterminé de l'image, et
- la détermination de la distance qui sépare le stylo du support à partir de la mesure de la position de la tête d'impression et l'inhibition de l'impression de l'image sur le support si cette distance est supérieure à un seuil prédéterminé.

Les modes de réalisation de ce procédé d'impression peuvent comporter la caractéristique suivante :

■ le procédé comprend la mesure de l'orientation de la tête d'impression par rapport au support et l'inhibition de l'impression de l'image sur le support si l'orientation mesurée de la tête d'impression par rapport à la borne repère n'est pas comprise dans un cône d'autorisation de lâché d'encre défini par un angle au sommet et une direction prédéterminée; et

■ le procédé comprend la mesure de l'orientation du stylo par rapport au support et le réglage de la quantité d'encre projetée sur le support en fonction de l'orientation mesurée.

L'invention a également pour objet un support d'enregistrement d'informations comportant des instructions pour la mise en oeuvre du procédé d'impression ci-dessus, lorsque ces instructions sont exécutées par un calculateur électronique.

L'invention a également pour objet un stylo pour la mise en oeuvre du dispositif d'impression ci-dessus, ce stylo incorporant au moins une partie des éléments de l'unité de mesure apte à mesurer la position de la tête d'impression par rapport à la borne et une unité de commande apte à déterminer la distance qui sépare le stylo du support à partir de la mesure de la position de la tête d'impression et à inhiber l'impression de l'image sur le support si cette distance est supérieure à un seuil prédéterminé.

Enfin, l'invention a également pour objet une unité de commande pour la mise en oeuvre du dispositif ci-dessus dans lequel cette unité de commande est programmée pour déterminer la distance qui sépare le stylo du support à partir de la mesure de la position de la tête d'impression et à inhiber l'impression de l'image sur le support si cette distance est supérieure à un seuil prédéterminé.

L'invention sera mieux comprise à la lecture de la description qui va suivre donnée uniquement à titre d'exemple non limitatif et faite en se référant aux dessins sur lesquels :

- la figure 1 est une illustration schématique et en perspective d'un premier mode de réalisation d'un dispositif d'impression,
- la figure 2 est un organigramme d'un procédé d'impression à l'aide du dispositif de la figure 1,
- la figure 3 est une illustration schématique et en perspective d'un deuxième mode de réalisation d'un dispositif d'impression, et
- la figure 4 est une illustration schématique en vue de dessus d'un troisième mode de réalisation d'un dispositif portable d'impression.

Dans ces figures, les mêmes références sont utilisées pour désigner les mêmes éléments.

Dans la suite de cette description, les caractéristiques et fonctions bien connues de l'homme du métier ne sont pas décrites en détail.

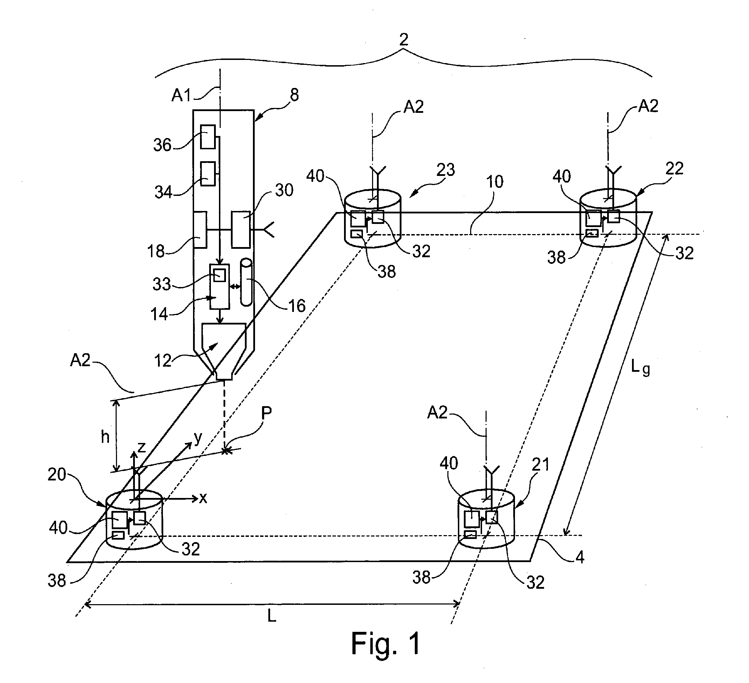

La figure 1 représente un dispositif 2 d'impression d'une image sur un support matériel 4 horizontal.

Ici, par image, on désigne tout type de motif susceptible d'être imprimé sur le support 4. Ces motifs peuvent être en noir et blanc ou en dégradé de gris ou encore en couleur avec si nécessaire des dégradés de couleur. Ces motifs peuvent correspondre à une photo, un motif géométrique ou autres.

Le support 4 présente une face supérieure plane et horizontale. Le support 4 est réalisé dans tout type de matériau susceptible d'être imprimé. Ici, le support 4 est réalisé dans un matériau susceptible d'être détérioré s'il entre directement en contact avec une tête d'impression. Par exemple, il s'agit d'une membrane souple et fragile telle que la peau humaine, une toile d'araignée, une membrane de lait, de la mousse de bière....

Le dispositif 2 est portable c'est-à-dire qu'il est directement transportable par un être humain sans avoir recours à des moyens techniques de levage. A cet effet, le poids de l'ensemble des éléments du dispositif 2 est typiquement inférieur à 10 kg et, de préférence, inférieur à 5 ou 1 kg. Pour faciliter le transport, l'encombrement de l'ensemble des éléments de ce dispositif 2 est typiquement inférieur à 0,15 m$^3$ et, de préférence, inférieur à 10$^{-3}$ ou 10$^{-4}$ m$^3$.

Le dispositif 2 comprend un stylo 8 manuellement déplaçable par un opérateur au-dessus d'une zone d'impression 10 aménagée sur la face supérieure du support 4 et à l'intérieur de laquelle doit être imprimée l'image. Le stylo 8 doit être séparé verticalement du support 4 par une hauteur h supérieure à un seuil $S_3$ non nul de manière à ne pas venir directement en contact avec le support.

La zone d'impression 10 est ici rectangulaire avec une largeur L et une longueur Lg.

Le stylo 8 s'étend essentiellement le long d'un axe longitudinal A1. Les dimensions du stylo 8 sont prévues pour que celui-ci soit facilement manipulable par la main de l'opérateur. Par exemple, la longueur du stylo 8 est inférieure à 20 cm et sa largeur est inférieure à 5 cm. Le poids du stylo 8 est typiquement inférieur à 1 kg et, de préférence, inférieur à 200 g.

Le stylo 8 comprend une tête d'impression 12 regroupant l'ensemble des éléments nécessaires à l'impression sur ce support 4. Par exemple, la tête 12 est une tête d'impression à jet d'encre équipée :

- d'un ou plusieurs réservoirs d'encre à projeter sur le support 4,
- d'au moins une buse de projection de l'encre, et
- d'au moins un actionneur pour déplacer l'encre du réservoir vers la buse et projeter l'encre sur le support 4.

On suppose ici que chaque buse de projection d'encre s'étend essentiellement parallèlement à l'axe A1.

Le stylo 8 comprend également :

- une unité 14 de commande de la tête d'impression 12,

- un mémoire 16 contenant l'image à imprimer sur le support 4,
- une interface 18, et
- une source d'énergie (non représentée) nécessaire à son fonctionnement telle qu'une batterie.

L'unité 14 est raccordée à la mémoire 16. L'image enregistrée dans la mémoire 16 est codée, par exemple, dans un format standard tel que le format « bitmap ». Ici, l'image à imprimer est une image rectangulaire.

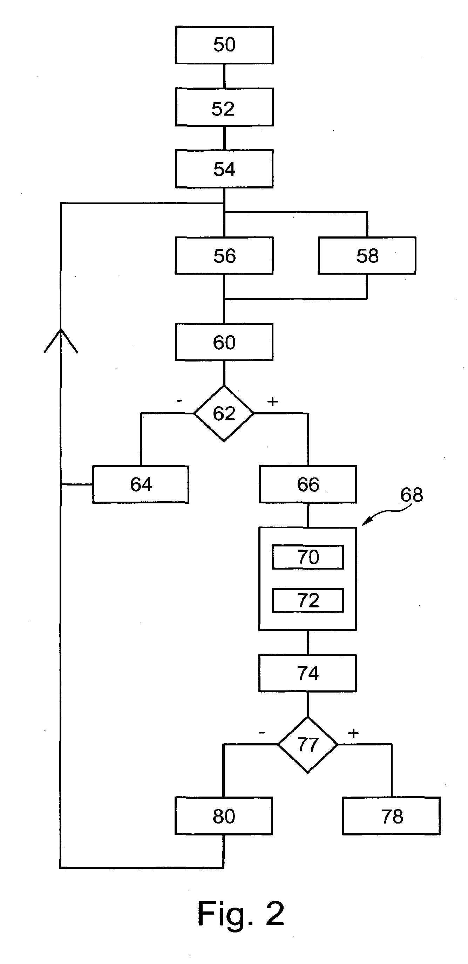

L'unité 14 de commande est réalisée à partir de calculateurs électroniques programmables aptes à exécuter des instructions enregistrées sur un support d'enregistrement d'informations. A cet effet, la mémoire 16 comprend les instructions nécessaires à l'exécution du procédé de la figure 2, lorsqu'elles sont exécutées par l'unité 14.

L'interface 18 permet de raccorder le stylo 8 à un ordinateur pour enregistrer une image à imprimer dans la mémoire 16.

Le dispositif 2 comprend également des bornes repères amovibles positionnables manuellement sur le support 4. A titre d'illustration, dans ce mode de réalisation, le dispositif comprend quatre bornes repères 20 à 23.

Les bornes 20 à 23 sont rapportées sur le support 4 déjà existant. Elles sont donc mécaniquement indépendantes du support 4 et peuvent être librement positionnées sur le support 4 par l'opérateur. Ici, les bornes sont déposées sur ce support 4 et uniquement maintenues en place sur le support 4 par la gravité.

Chacune de ces bornes repères est associée à un point de l'image à imprimer par une relation prédéfinie indépendante de la position de la borne sur le support. Cette relation prédéfinie est par exemple enregistrée dans la mémoire 16. Ici cette relation prédéfinie indique que chacune des bornes 20 à 23 correspond à un angle de l'image rectangulaire à imprimer. Ces bornes délimitent donc la zone d'impression 10.

Le dispositif 2 comprend une unité de mesure de la position et de l'orientation de la tête d'impression 12 par rapport aux bornes repères 20 à 23. Cette unité mesure les six degrés de liberté de la tête d'impression. A cet effet, la position et l'orientation de la tête d'impression sont indiquées, respectivement, par deux triplets de coordonnées x, y, z et $\theta_x$, $\theta_y$, $\theta_z$ exprimés dans un référentiel XYZ orthogonal fixé sans aucun degré de liberté à la borne 20. Ici, les directions X et Y du référentiel XYZ sont parallèles à la face supérieure du support 4 tandis que la direction Z s'étend verticalement. Les angles $\theta_x$, $\theta_y$ et $\theta_z$ correspondent aux angles que fait l'axe A1, respectivement, avec les directions X, Y et Z.

Pour déterminer la position de la tête d'impression 12, dans ce mode de réalisation, le stylo 8 et les bornes 20 à 23 sont équipées, respectivement, d'émetteurs/récepteurs 30 et 32 d'ondes électromagnétiques. Par exemple, les émetteurs/récepteurs 30 et 32 sont des émetteurs/récepteurs d'ondes Ultra-large bande plus connues sous l'acronyme UWB (Ultra Wide Band). Chacun de ces émetteurs/récepteurs est équipé d'une horloge permettant de mesurer les instants d'émission et de réception des ondes de manière à pouvoir mesurer le temps de propagation de l'onde entre les émetteurs/récepteurs 30 et 32.

L'unité 14 est aussi équipée d'un déterminateur 33 de la distance qui sépare le stylo 8 de chacune des bornes 20 à 23 à partir des temps de propagation mesurés.

L'orientation de la tête d'impression est ici représentée par l'orientation de l'axe A1 qui est solidaire de la tête d'impression. La mesure de l'orientation de la tête d'impression 12 consiste donc à mesurer les angles $\theta_x$, $\theta_y$ et $\theta_z$. A cet effet, l'unité de mesure comporte également :

- un accéléromètre 34 et un magnétomètre 36 fixés sans aucun degré de liberté au stylo 8, et
- des accéléromètres 38 et des magnétomètres 40 fixés sans aucun degré de liberté à chacune des bornes 20 à 23.

Par exemple, l'accéléromètre 34 et le magnétomètre 36 sont logés à l'intérieur du stylo 8. Un accéléromètre 38 et un magnétomètre 40 sont logés à l'intérieur de chacune des bornes 20 à 23.

L'accéléromètre 34 mesure l'angle que fait l'axe A1 avec la direction verticale représentée par la direction locale du champ de gravité terrestre. Le magnétomètre 36 mesure l'angle que fait l'axe A1 avec le nord magnétique du champ magnétique terrestre.

De préférence, l'accéléromètre 34 et le magnétomètre 36 sont placés dans la partie du stylo 8 la plus éloignée de la tête d'impression 12 de manière à augmenter la précision de la mesure de l'orientation de l'axe A1.

L'accéléromètre 38 mesure l'angle que fait un axe A2 solidaire de la borne repère avec la verticale. Le magnétomètre 40 mesure l'angle que fait cet axe A2 avec le nord magnétique.

L'orientation de l'axe A2 doit être représentative de l'orientation de la face supérieure du support 4. Pour cela, ici, chaque borne repère est conformée pour que lorsque elle est déposée sur le support 4, l'axe A2 soit systématiquement perpendiculaire à la face supérieure du support 4. Par exemple, chacune des bornes repère comporte au moins une face plane perpendiculaire à l'axe A2 et destinée à être directement en appui sur la face supérieure du support 4. De préférence, chaque borne repère comporte au plus deux de ces faces planes, les autres faces de la borne étant concaves. Ici, chaque borne à la forme d'un cylindre dont l'axe de révolution est l'axe A1.

Le fonctionnement du dispositif 2 va maintenant être décrit plus en détail en regard du procédé de la figure 2.

De préférence, initialement, lors d'une étape 50, l'image à imprimer est enregistrée dans la mémoire 16. Par exemple, à cet effet, le stylo 8 est raccordé à un ordinateur par l'intermédiaire de l'interface 18.

Ensuite, lors d'une étape 52, les bornes 20 à 23 sont déposées manuellement sur le support 4. Ici, elles sont positionnées de manière à délimiter les angles de la zone d'impression 10.

Lors d'une étape 54, le stylo 8 est mis sous tension puis approché de la zone d'impression 10.

Dès lors, lors d'une étape 56, la position de la tête d'impression 12 par rapport aux bornes 20 à 23 est mesurée. A cet effet, le déterminateur 33 mesure les temps de propagation de l'onde électromagnétique émise par l'émetteur/récepteur 30 jusqu'aux bornes 20 à 23. Ces temps de propagation sont ensuite utilisés par l'unité 14 pour établir la distance qui sépare la tête d'impression 12 de chacune des bornes 20 à 23. De façon similaire, lors de l'étape 56, les distances qui séparent les bornes 20 à 23 les unes des autres sont mesurées. A partir de ces différents temps de propagations, l'unité 14 établit les coordonnées x, y et z de la tête d'impression 12 dans le référentiel XYZ, par exemple, par triangulation.

En parallèle, lors d'une étape 58, l'orientation de l'axe A1 par rapport aux directions X, Y et Z est également mesurée. A cet effet, l'accéléromètre 34 et le magnétomètre 36 mesure, respectivement, l'orientation de l'axe A1 par rapport à la verticale et au nord magnétique. Dans le même temps, les accéléromètres 38 et les magnétomètres 40 de chacune des bornes 20 à 23 mesurent l'orientation de l'axe A2, respectivement, par rapport à la verticale et au nord magnétique. Ces mesures sont ensuite transmises à l'unité 14 qui les combine pour obtenir les coordonnées angulaires $\theta_x$, $\theta_y$ et $\theta_z$ de l'axe A1 dans le référentiel XYZ.

A partir de la position et de l'orientation mesurée du stylo 8, lors d'une étape 60, l'unité 14 détermine la distance verticale h (figure 1) qui sépare la tête d'impression 12 du support 4 et la valeur de l'angle $\theta_z$ entre de l'axe A1 et la direction verticale Z.

Lors d'une étape 62, l'unité 14 vérifie si le stylo se trouve à l'intérieur d'un cône d'autorisation de lâché d'encre sensiblement perpendiculaire au plan du support 4. Par exemple, à cet effet, la distance $\underline{h}$ et la valeur absolue de l'angle $\theta_z$ sont comparées, respectivement, à des seuils prédéterminés $S_1$ et $S_2$. Si la distance $\underline{h}$ est supérieure au seuil $S_1$ ou si la valeur absolue de l'angle $\theta_z$ est supérieure au seuil $S_2$ alors, lors d'une étape 64, la projection d'encre par la tête d'impression 12 sur le support 4 est automatiquement inhibée. Ainsi, les seuils $S_1$ et $S_2$ définissent le cône d'autorisation de lâché d'encre. Lorsque le stylo n'est pas à l'intérieur de ce cône, c'est-à-dire qu'il est trop loin du support 4 ou trop incliné par rapport à ce support, alors l'impression doit être interdite car elle ne peut pas être réalisée correctement.

Dans le cas contraire, le procédé se poursuit par une étape 66 lors de laquelle les coordonnées d'un point P (figure 1) de dépôt d'encre sur le support 4 sont calculées. Le point P est l'emplacement de la zone d'impression 10 où l'encre projetée par la tête d'impression 12 va se déposer. Les coordonnées du point P sont obtenues à partir des coordonnées mesurées x, y, z et $\theta_x$, $\theta_y$, $\theta_z$ de la tête d'impression. Par exemple, les coordonnées du point P sont obtenues en calculant les coordonnées du point d'intersection entre la trajectoire de l'encre projetée par la tête d'impression et la zone d'impression 10.

Ensuite, lors d'une étape 68, l'unité 14 détermine quel est le point de l'image enregistrée dans la mémoire 16 associé au point P. Pour cela, la relation prédéfinie reliant chaque borne repère à un point de l'image est utilisée.

Par exemple, si cela n'a pas déjà été fait, lors d'une opération 70, l'unité 14 calcule la dimension de la zone d'impression 10 à partir de la position des différentes bornes 20 à 23 par rapport au stylo 8. Ensuite, lors de cette opération 70, l'unité 14 calcule un facteur d'étirement permettant de convertir les coordonnées du point P exprimées dans le référentiel XYZ en des coordonnées correspondant à un pixel de l'image à imprimer. Par exemple, deux facteurs d'étirement $C_x$ et $C_y$ selon, respectivement, les directions X et Y sont calculés à l'aide des relations suivantes :

$$C_x = (L_{img}/L)$$

$$C_y = (L_{gimg}/Lg)$$

où $L_{img}$ et $L_{gimg}$ sont respectivement la largeur et la longueur de l'image à imprimer.

L'espacement entre les bornes détermine donc les dimensions de l'image qui va être imprimée. En d'autres termes, plus l'on espace les bornes repères l'une de l'autre, plus l'on agrandit l'image à imprimer. A l'inverse, plus l'on rapproche les bornes repères l'une de l'autre plus l'on rétrécit l'image à imprimer. Ici, dans tous les cas, l'image à imprimer occupe l'ensemble de la zone d'impression.

Dans ce cas particulier, étant donné que la zone d'impression et l'image à imprimer sont rectangulaires, les facteurs d'étirement $C_x$ et $C_y$ sont constants quelles que soit les coordonnées x, y du point P.

Toutefois, si la zone d'impression et l'image à imprimer n'ont pas la même forme (par exemple la zone d'impression délimitée est trapézoïdale et l'image à imprimer est rectangulaire) alors les facteurs d'étirement $C_x$ et $C_y$ varient en fonction des coordonnées x, y du point P de manière à ce que l'image remplisse toujours complètement la zone d'impression.

Une fois les facteurs d'étirement $C_x$, $C_y$ établis, lors d'une opération 72, ceux-ci sont utilisés pour obtenir les coordonnées du pixel à imprimer à partir des coordonnées x et y du point de dépôt. Par exemple, les coordonnées x et y sont simplement multipliées, respectivement par les facteurs d'étirement $C_x$ et $C_y$.

Une fois le pixel à imprimer identifié, lors d'une étape 74, l'unité 14 commande la tête d'impression pour imprimer le pixel identifié lors de l'étape 68. Lors de cette étape, de préférence, la quantité d'encre projetée sur le support est réglée en fonction de l'orientation mesurée du stylo 12.

Ensuite, lors d'une étape 77, les coordonnées du pixel imprimé sont mémorisées, par exemple dans la mémoire 16, puis l'unité 14 vérifie si l'ensemble des pixels de l'image ont déjà ou non été imprimés.

Si l'ensemble des pixels a déjà été imprimé, alors on procède à une étape 78 lors de laquelle le procédé d'impression est automatiquement arrêté. Le stylo est alors éteint puis les bornes repères 20 à 23 sont retirées du support 4. L'impression de l'image sur le support 4 est terminée.

Dans le cas contraire, lors d'une étape 80, l'opérateur déplace manuellement le stylo 8 vers des emplacements de la zone d'impression 10 ou l'impression n'a pas encore été réalisée. A l'issue de cette étape 80, les étapes 56 à 80 sont réitérées tant que tous les pixels de l'image à imprimer n'ont pas été imprimés sur le support 4.

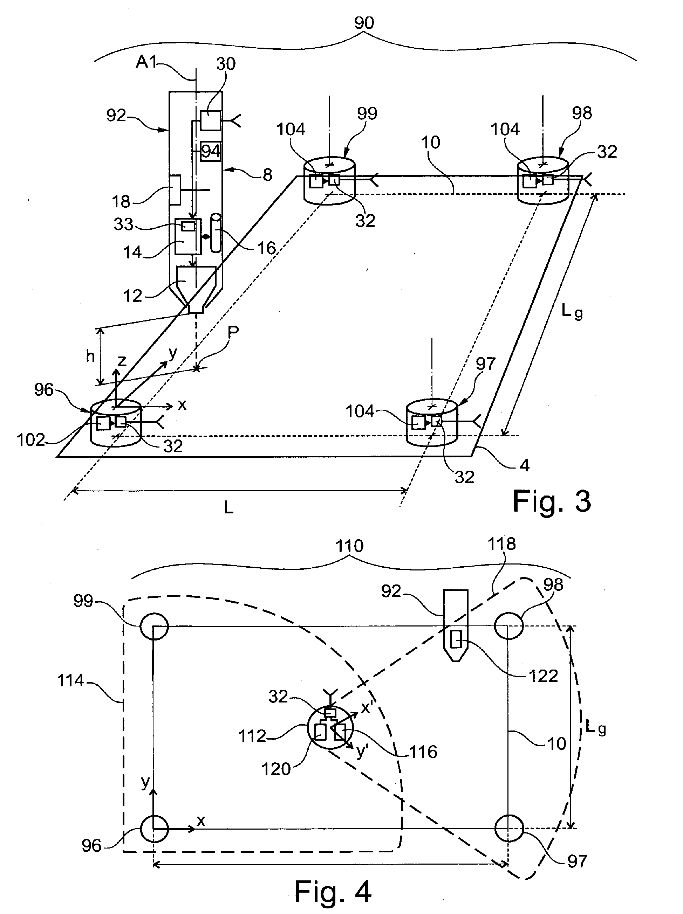

La figure 3 représente un dispositif 90 d'impression identique au dispositif 2 à l'exception que l'unité de mesure de la position et de l'orientation de la tête d'impression 12 est différente. Plus précisément, l'unité de mesure est cette fois-ci réalisée à l'aide d'au moins une source magnétique triaxe et d'au moins un capteur triaxe de champ magnétique.

Par « source triaxe » de champ magnétique on désigne une source de champ magnétique capable d'émettre des champs magnétiques dans au moins trois directions non colinéaires différentes. Typiquement, ces directions d'émission sont orthogonales les unes aux autres. Par exemple une telle source triaxe est réalisée à l'aide de trois bobines enroulées chacune autour de trois axes d'enroulement perpendiculaire entre eux. Par exemple, les spires de chaque bobine sont sensiblement réparties à part égale de part et d'autre d'un point O d'intersection entre les trois axes d'enroulement. Une telle source triaxe de champ magnétique est modélisable en champ lointain comme trois dipôles magnétiques ponctuels centrés au point O. On considère que l'on est en champ lointain dès que l'on est éloigné du point O au moins de trois à quatre fois la plus grande dimension de la source triaxe. La plus grande dimension de la source triaxe est par exemple égale à la plus grande longueur des bobines. La source triaxe émet un champ magnétique soit simultanément sur chacun des axes d'émission soit séquentiellement dans le temps.

Par « capteur triaxe » de champ magnétique on désigne un capteur capable de mesurer la projection du champ magnétique sur au moins trois axes de mesure non colinéaires entre eux. Typiquement, ces axes de mesure sont orthogonaux entre eux. Un tel capteur triaxe est par exemple réalisé de façon similaire à la source triaxe à l'exception que les bobines sont utilisées pour mesurer la projection du champ magnétique et non pas pour émettre un champ magnétique.

Dans le mode de réalisation de la figure 3, le stylo 8 est remplacé par un stylo 92 identique au stylo 8. Toutefois, l'accéléromètre 34 et le magnétomètre 36 sont remplacés par un capteur triaxe 94 de champ magnétique. Ce capteur 94 est solidaire du stylo 92 et par exemple logé à l'intérieur de ce stylo.

Les bornes 20 à 23 sont remplacées par des bornes 96 à 99 identiques aux bornes 20 à 23 à l'exception du fait que les accéléromètres 38 et magnétomètres 40 sont remplacés, dans la borne 96, par une source triaxe 102 de champ magnétique et dans les bornes 97 à 99 par un capteur triaxe 104 de champ magnétique.

Les émetteurs/récepteurs 30 et 32 sont conservés pour permettre l'échange d'informations entre le stylo et les bornes repères 96 à 99. Ces échanges d'informations sont par exemple utilisés pour synchroniser temporellement la source 102 et les capteurs 94 et 104.

Le déterminateur 33 établit la position et l'orientation de la tête d'impression 12 dans le référentiel XYZ fixé sans aucun degré de liberté à la borne 96 en résolvant un système d'équations. Ce système d'équations est obtenu en modélisant les interactions magnétiques entre la source triaxe 102 et le capteur triaxe 94. Dans ce système d'équations, les coordonnées x, y et z et $\theta_x$, $\theta_y$ et $\theta_z$ de la tête d'impression sont les inconnues. Plus d'informations sur de tels systèmes d'équations peuvent, par exemple, être trouvées dans la demande de brevet EP 1 502 544. On pourra également se référer à la demande de brevet FR 09 53 462.

Le fonctionnement du dispositif 90 est identique à celui décrit en regard de la figure 2 sauf que la position et l'orientation de la tête d'impression sont mesurées différemment.

La figure 4 représente un dispositif 110 d'impression par exemple identique au dispositif 90 à l'exception qu'il comporte au moins une borne relais. Pour simplifier la figure 4, seule une borne relais 112 a été représentée.

La borne relais 112 permet d'augmenter les dimensions de la zone d'impression 10 sans pour autant augmenter la puissance des signaux utilisés pour mesurer la position et l'orientation de la tête d'impression. Plus précisément, dans ce mode de réalisation, la portée utile du champ magnétique émis par la source 102 incorporée dans la borne 96 est représentée par une zone de couverture 114. On se place ici dans l'hypothèse où cette zone de couverture 114 n'est pas suffisamment étendue pour inclure les bornes 97 et 98.

La borne 112 comprend l'émetteur/récepteur 32 pour échanger des informations avec les autres bornes et le stylo 92. Cette borne 112 comprend également une source triaxe 116 de champ magnétique par exemple identique à la source 102. La portée utile de cette source 116 est représentée par une zone de couverture 118. La borne 112 est disposée à l'intérieur de la zone de couverture 114 de manière à ce que sa propre zone de couverture 118 soit suffisamment étendue pour inclure les bornes 97 et 98. De plus, ici, le stylo 92 est situé dans la zone de couverture 118 et non pas dans la zone de couverture 114.

Enfin, la borne relais 112 comprend un capteur triaxe 120 par exemple identique au capteur 104.

Un convertisseur 122 de coordonnées est implanté en plus dans le stylo 92.

Etant donné que les bornes 97 et 98 et le stylo 92 sont uniquement dans la zone de couverture 118, la position et l'orientation de ces bornes 97 et 98 et du stylo 92 sont exprimées dans un référentiel X'Y'Z' fixé sans aucun degré de liberté à la borne 112 (seul les directions X' et Y' sont visibles sur la figure 4). Toutefois, étant donné que la borne 112 comprend le capteur 120, la position et l'orientation de cette borne 112 par rapport à la borne 96 sont mesurées. A partir de ces mesures, le convertisseur 122 convertit les coordonnées x', y', z' du stylo 92 exprimées dans le référentiel X'Y'Z' en des coordonnées x, y, z exprimées dans le référentiel XYZ puisque la position et l'orientation de la borne relais 112 dans ce référentiel XYZ sont connues. A partir de ce moment là, le fonctionnement du dispositif 10 est identique à celui du dispositif 90.

De nombreux autres modes de réalisation sont possibles. En particulier, d'autres types d'impression qu'une impression par jet d'encre sont possibles. Par exemple, la tête d'impression peut être remplacée par une autre tête d'impression propre à réaliser une impression par transfert thermique, par électrophotographie ou autre.

La forme du support peut être quelconque, son inclinaison par rapport à la verticale peut également être quelconque ainsi que sa taille ou la nature du matériau du support. Par exemple, le support peut être une feuille de papier, une plaque de verre, un mur, un plafond, un enduit, ...etc. Seule l'encre est éventuellement adaptée à la nature du matériau du support. Lorsque le support est incliné par rapport à la verticale, de préférence, les bornes repères sont équipées de moyens de fixation de celles-ci sur le support 4. Par exemple, la face plane de ces bornes destinée à venir en contact avec le support est recouverte d'un adhésif permettant de coller et ensuite de décoller manuellement ces bornes sur le support.

Si la zone d'impression est supérieure à la portée des signaux nécessaires pour mesurer la position et l'orientation de la tête d'impression, plutôt que d'utiliser des bornes relais, les bornes repères peuvent être remplacées par des bornes repères capables d'émettre des signaux dont la puissance et la portée sont augmentées.

Le nombre de bornes repères peut être supérieur à quatre. Par exemple, plus de quatre bornes repères permettent de délimiter simplement des zones d'impression ayant plus de quatre angles telles que par exemple une zone d'impression pentagonale.

Le nombre de bornes repères peut également être inférieur à quatre et dans un cas simplifié une seule borne repère est nécessaire. Par exemple, dans le mode de réalisation de la figure 3, les bornes 97 à 99 du dispositif 90 sont omises. Toutefois, dans ce dernier cas, les coefficients d'étirement ne sont plus fonction de la distance entre deux bornes repères. Les dimensions de la zone d'impression sont donc constantes ou systématiquement prises égales aux dimensions de l'image ou uniquement déduites à partir des dimensions de l'image.

En variante, la relation prédéfinie qui relie une borne repère à un pixel de l'image est préenregistrée uniquement pour une ou plusieurs premières bornes repères et n'est pas préenregistrée pour une ou plusieurs secondes bornes repères. Par exemple, il n'y a qu'une seule première borne repère. Ensuite, la relation prédéfinie est établie pour les secondes bornes repères par calcul. Par exemple, la relation prédéfinie est établie pour les secondes bornes repères en fonction des mesures de leur position par rapport à la première borne repère et de la relation prédéfinie qui relie cette première borne repère à un pixel de l'image.

Le support 4 a été décrit dans le cas particulier où la face à imprimer est plane. Toutefois, en variante, cette face n'est pas nécessairement plane. Par exemple, elle peut être hémisphérique ou présenter d'autres bossages. A partir d'une connaissance préalable de la forme du support entre les différentes bornes repères, et à partir des mesures de la position et de l'orientation du stylo par rapport à ces bornes repères, la distance qui sépare le stylo du support et son orientation par rapport à ce support peuvent être déterminées.

Les bornes repères ne correspondent pas nécessairement à un angle de l'image. Par exemple, en variante, chaque borne repère est associée à un point prédéfini de l'image autre qu'un angle de cette image. En particulier, une borne repère peut être associée au centre de l'image tandis qu'une autre borne repère est associée à un point médian du bord supérieur de l'image.

La répartition des différents éléments décrits en regard des figures précédentes entre d'une part le stylo et d'autre part les bornes peut être modifiée. Par exemple, en variante, l'unité de commande et la mémoire sont logées dans une borne. De façon générale, toutes les fonctions décrites ici comme étant réalisées par des éléments du stylo peuvent être réparties différemment entre le stylo et les bornes.

La mémoire dans laquelle est enregistrée l'image à imprimer n'est pas non plus nécessairement dans le stylo ou l'une des bornes. Elle peut, par exemple, être située dans un ordinateur apte à communiquer avec le stylo 8 par l'intermédiaire de l'interface 18. Dans ce cas, le stylo peut récupérer au fur et à mesure qu'il en a besoin, les informations sur l'image à imprimer.

Il est également possible que la source magnétique soit dans le stylo et non pas dans la borne ou que plusieurs sources magnétiques soient utilisées simultanément dont au moins une dans une borne et au moins une dans le stylo.

En variante, la source 116 et le capteur 120 sont réalisés à l'aide d'un même ensemble triaxe de trois bobines dont les axes d'enroulement ne sont pas colinéaires. Dans ce cas, l'ensemble triaxe est piloté soit en mode source soit en mode capteur. Lorsque les bobines de l'ensemble triaxe sont pilotées en mode source, elles sont alimentées pour générer les champs magnétiques. Dans le mode source, l'ensemble triaxe est identique à l'une des sources triaxes décrites précédemment. Dans le mode capteur, les bobines ne sont pas alimentées. Par conséquent, le flux magnétique ambiant qui les traverse entraîne la présence de courants qui constituent la mesure du champ magnétique ambiant. Dans le mode capteur, l'ensemble triaxe est identique à l'un des capteurs triaxes décrits précédemment.

D'autres types d'ondes que les ondes ultralarge bande peuvent être utilisées. Par exemple des ondes acoustiques peuvent être utilisées.

Le facteur d'étirement peut être déterminé uniquement à partir de la distance séparant par exemple deux bornes repères l'une de l'autre. Typiquement, dans ce cas là, ces bornes repères sont utilisées pour repérer la diagonale de l'image à imprimer et seront de préférence situées aux extrémités de cette diagonale.

Dans une autre variante, le calcul du facteur d'étirement est omis. Dans ce cas, la dimension de la zone d'impression est constante ou alors uniquement établie à partir des dimensions de l'image enregistrée dans la mémoire 16.

En variante, seule la position de la tête d'impression est mesurée et non pas son orientation. Dans ce cas, étant donné que le nombre d'inconnus est réduit, le nombre d'axes des capteurs et des sources peut être réduit. Par exemple, des capteurs ou sources biaxes peuvent être utilisés à la place des capteurs ou sources triaxes. La réduction du nombre d'axés utilisés peut également être obtenue en diminuant le nombre de capteurs ou sources triaxes.

L'orientation du stylo peut aussi être représentée par quaternion.

Si chaque source génère de façon continue un champ magnétique périodique avec un motif fréquentiel qui lui est propre, alors une synchronisation temporelle entre la source 102 et les capteurs 94 et 104 par l'intermédiaire des émetteurs/récepteurs 30, 32 n'est pas nécessaire. A la place, une détection synchrone peut être utilisée.

Le procédé d'impression peut également être modifié. Par exemple, l'arrêt de l'impression automatique peut être omis. Dans ce cas, l'impression sur le support 4 est arrêtée par l'opérateur et non pas automatiquement.

L'étape 77 peut être modifiée pour permettre l'impression successive en un même point de la zone d'impression d'une superposition de plusieurs couches d'encre. Par exemple, lors de l'étape 77 le pixel imprimé et la couleur imprimée sont enregistrés après chaque impression en un point P du support 4. Ensuite, lors d'un second passage du stylo 8 sur ce point P, l'unité 14 sélectionne automatiquement une seconde encre à imprimer sur ce point P. Les encres déposées entre chaque passage du stylo sur un même point sont différentes ou non. Les encres déposées par couches successives sur un même point peuvent se mélanger ou non. L'impression ne s'arrête qu'une fois que toutes les couches de peinture ont été déposées sur chaque point P de la zone d'impression.

L'étape 62 peut être modifiée pour mettre en oeuvre d'autres critères de décision quant à l'opportunité d'inhiber automatiquement l'impression. Par exemple, dans une variante simplifiée, la comparaison au seuil $S_1$ ou $S_2$ est omise.

Dans une autre variante, l'impression est automatiquement inhibée lorsque la distance h mesurée est inférieure au seuil prédéterminé $S_3$. Lorsque la hauteur h passe en dessous de ce seuil $S_3$, une alarme, par exemple un signal sonore, est automatiquement déclenchée pour signaler à l'utilisateur que le stylo 8 est trop proche du support 4 et risque donc d'entrer en contact avec ce support. Le contact entre le support 4 et le stylo 8 peut endommager le support.

Lors de l'étape 68, la commande de la tête d'impression peut être fonction de l'orientation de l'axe A1. Par exemple, le débit d'encre ou la quantité d'encre projetée est réglé en fonction de l'orientation de l'axe A1 par rapport à la verticale. A l'inverse, le réglage de la quantité d'encre projetée en fonction de l'orientation mesurée peut être omis.

Dans une autre variante, le dispositif 2 comporte simultanément plusieurs stylos utilisés pour imprimer simultanément la même image dans la même zone d'impression. Cela permet alors à plusieurs opérateurs de travailler à l'impression de la même image en même temps dans la même zone d'impression. Pour que les différentes parties de la même image imprimée par chacun des stylos se juxtaposent parfaitement, il suffit simplement que la position de chacun de ces stylos soit mesurée dans le même référentiel lié aux bornes repères.

Les caractéristiques objets des revendications dépendantes peuvent être mises en oeuvre indépendamment des caractéristiques permettant d'inhiber automatiquement l'impression de l'image. En particulier, l'utilisation d'une borne relais peut être mise en oeuvre sans que soient implémentées les caractéristiques pour inhiber l'impression de l'image si le stylo est trop éloigné du support ou trop incliné par rapport à ce support.

**Revendications**

1. Dispositif portable d'impression d'une image dans une zone d'impression aménagée sur un support matériel, ce dispositif comprenant :

   - au moins un stylo (8 ; 92) équipé d'une tête (12) d'impression déplaçable manuellement dans la zone d'impression,

- au moins une borne repère (20-23 ; 96-99) amovible positionnable manuellement sur le support et associée à un point correspondant de l'image à imprimer par une relation prédéfinie indépendante de la position de cette borne repère sur le support,
- une unité de mesure de la position de la tête d'impression apte à mesurer la position de la tête d'impression par rapport à la borne repère,
- une unité (14) de commande de la tête d'impression apte à commander l'impression sur le support d'un point de l'image déterminé, cette unité (14) de commande étant apte à déterminer le point de l'image à imprimer en fonction :

   • de la position mesurée actuelle de la tête d'impression par rapport à la borne repère, et
   • de la relation prédéfinie qui associe un point de l'image à cette borne, **caractérisé en ce que** l'unité (14) de commande est apte à déterminer la distance qui sépare le stylo du support à partir de la mesure de la position de la tête d'impression et à inhiber l'impression de l'image sur le support si cette distance est supérieure à un seuil prédéterminé.

2. Dispositif selon la revendication 1, dans lequel l'unité de mesure est également apte à mesurer l'orientation de la tête d'impression par rapport à la borne repère et l'unité (14) de commande est également apte à commander la tête d'impression en fonction de cette orientation mesurée.

3. Dispositif selon l'une quelconque des revendications précédentes, dans lequel le dispositif comprend :

   - au moins deux bornes repères (20-23 ; 96-99),
   - l'unité de mesure est apte à mesurer la distance entre ces deux bornes repères, et
   - l'unité (14) de commande est apte à déterminer le point de l'image à imprimer en fonction en plus de la distance mesurée entre ces deux bornes repères pour étirer ou rétrécir l'image proportionnellement à cette distance.

4. Dispositif selon l'une quelconque des revendications précédentes, dans lequel :

   - le dispositif comprend au moins une borne relais (112) positionnable manuellement indépendamment de la borne repère, cette borne relais n'étant pas associée à un point de l'image par une relation prédéfinie indépendante de sa position par rapport au support, et

- l'unité de mesure comprend aussi :

   • un capteur (94) de la position du stylo dans un référentiel solidaire de cette borne relais,
   • un capteur (120) de la position de la borne relais par rapport à la borne repère, et
   • un convertisseur (122) de la position mesurée du stylo exprimée dans le référentiel solidaire de la borne relais en une position relative à la borne repère.

5. Dispositif selon l'une quelconque des revendications précédentes, dans lequel l'unité de mesure comprend :

   - au moins un capteur (94) de champ magnétique et au moins une source (102 ; 116) de champ magnétique, l'un du capteur et de la source de champ magnétique étant logé dans le stylo tandis que l'autre est logé dans la borne repère ou la borne relais, et
   - un déterminateur (33) de la position de la tête d'impression par rapport à la borne repère ou relais à partir des mesures, réalisées par le capteur, du champ magnétique rayonné par la source de champ magnétique.

6. Dispositif selon la revendication 5, dans lequel le capteur (94) de champ magnétique est un capteur triaxe de champ magnétique et la source (102 ; 116) de champ magnétique est une source triaxe de champ magnétique.

7. Dispositif selon l'une quelconque des revendications 1 à 4, dans lequel l'unité de mesure comprend :

   - au moins un émetteur (30) et un récepteur (32) d'une onde apte à se propager entre le stylo et la borne repère ou relais, l'un de cet émetteur et de ce récepteur étant logé dans le stylo tandis que l'autre est logé dans la borne repère ou relais, et
   - un déterminateur (33) de la position de la tête d'impression par rapport à la borne repère ou relais à partir du temps de propagation de l'onde entre l'émetteur et le récepteur.

8. Procédé d'impression d'une image dans une zone d'impression aménagée sur un support matériel à l'aide d'une tête d'impression logée dans un stylo déplaçable manuellement dans la zone d'impression pour imprimer sur le support un point déterminé de l'image, ce procédé comprenant :

   - le positionnement (52) manuel d'au moins une borne repère amovible sur le support, cette borne repère étant associée à un point correspondant de l'image à imprimer par une relation prédéfinie indépendante de la position de cette borne sur le support,
- la mesure (56) de la position de la tête d'impression par rapport à la borne repère,
- la détermination (68) du point de l'image à imprimer en fonction :

• de la position mesurée actuelle de la tête d'impression par rapport à la borne repère, et
• de la relation prédéfinie qui associe un point de l'image à cette borne,

- la commande de la tête d'impression pour imprimer sur le support le point déterminé de l'image,
**caractérisé en ce que** le procédé comprend la détermination (60) de la distance qui sépare le stylo du support à partir de la mesure de la position de la tête d'impression et l'inhibition (64) de l'impression de l'image sur le support si cette distance est supérieure à un seuil prédéterminé.

9. Procédé selon la revendication 8, dans lequel le procédé comprend la mesure de l'orientation de la tête d'impression par rapport au support et l'inhibition de l'impression de l'image sur le support si l'orientation mesurée de la tête d'impression par rapport à la borne repère n'est pas comprise dans un cône d'autorisation de lâché d'encre défini par un angle au sommet et une direction prédéterminée.

10. Procédé selon la revendication 8 ou 9, dans lequel le procédé comprend la mesure (58) de l'orientation du stylo par rapport au support et le réglage de la quantité d'encre projetée sur le support en fonction de l'orientation mesurée.

11. Support (16) d'enregistrement d'informations, **caractérisé en ce qu'**il comporte des instructions pour la mise en oeuvre d'un procédé conforme à l'une quelconque des revendications 8 à 10, lorsque ces instructions sont mises en oeuvre par un calculateur électronique.

12. Le dispositif conforme à l'une quelconque des revendications 1 à 7, dont ledit stylo étant équipé d'une tête (12) d'impression déplaçable manuellement dans la zone d'impression incorpore au moins une partie des éléments (30 ; 94) de l'unité de mesure apte à mesurer la position de la tête d'impression par rapport à la borne, **caractérisé en ce que** le stylo comporte une unité (14) de commande apte à déterminer la distance qui sépare le stylo du support à partir de la mesure de la position de la tête d'impression et à inhiber l'impression de l'image sur le support si cette distance est supérieure à un seuil prédéterminé.

13. Le dispositif conforme à l'une quelconque des revendications 1 à 7, **caractérisé en ce que** ladite unité (14) de commande est programmée pour déterminer la distance qui sépare le stylo du support à partir de la mesure de la position de la tête d'impression et pour inhiber l'impression de l'image sur le support si cette distance est supérieure à un seuil prédéterminé.

**Patentansprüche**

1. Tragbare Vorrichtung zum Drucken eines Bildes in einer Druckzone, die auf einem materiellen Träger angeordnet ist, wobei diese Vorrichtung umfasst:

- mindestens einen Stift (8; 92), der mit einem Druckkopf (12) versehen ist, der manuell in der Druckzone verschiebbar ist,
- mindestens einen abnehmbaren Markstein (20-23; 96-99), der manuell auf dem Träger positionierbar und einem entsprechenden Punkt des zu druckenden Bildes durch ein vordefiniertes Verhältnis, das von der Position dieses Marksteins auf dem Träger unabhängig ist, zugeordnet ist,
- eine Einheit zum Messen der Position des Druckkopfes, die geeignet ist, die Position des Druckkopfes in Bezug zum Markstein zu messen,
- eine Einheit (14) zur Steuerung des Druckkopfes, die geeignet ist, das Drucken eines bestimmten Punktes des Bildes auf den Träger zu steuern, wobei diese Steuereinheit (14) geeignet ist, den zu druckenden Punkt des Bildes zu bestimmen, in Abhängigkeit von:

* der aktuellen gemessenen Position des Druckkopfes in Bezug zum Markstein, und
* dem vordefinierten Verhältnis, das einen Punkt des Bildes diesem Markstein zuordnet,
**dadurch gekennzeichnet, dass** die Steuereinheit (14) geeignet ist, den Abstand zwischen dem Stift und dem Träger aus der Messung der Position des Druckkopfes zu bestimmen und das Drucken des Bildes auf den Träger zu verhindern, wenn dieser Abstand größer als eine vorbestimmte Schwelle ist.

2. Vorrichtung nach Anspruch 1, bei der die Messeinheit auch geeignet ist, die Ausrichtung des Druckkopfes in Bezug zu dem Markstein zu messen, und die Steuereinheit (14) auch geeignet ist, den Druckkopf in Abhängigkeit von dieser gemessenen Ausrichtung zu steuern.

**3.** Vorrichtung nach einem der vorhergehenden Ansprüche, bei dem die Vorrichtung umfasst:

- mindestens zwei Marksteine (20-23; 96-99),
- die Messeinheit, die geeignet ist, den Abstand zwischen diesen beiden Marksteinen zu messen, und
- die Steuereinheit (14), die geeignet ist, den zu druckenden Punkt des Bildes zusätzlich in Abhängigkeit von dem gemessenen Abstand zwischen diesen beiden Marksteinen zu bestimmen, um das Bild proportional zu diesem Abstand zu vergrößern oder zu verkleinern.

**4.** Vorrichtung nach einem der vorhergehenden Ansprüche, bei der:

- die Vorrichtung mindestens einen Relaisstein (112) umfasst, der manuell unabhängig von dem Markstein positionierbar ist, wobei dieser Relaisstein nicht einem Punkt des Bildes durch ein vordefiniertes Verhältnis, das von seiner Position in Bezug zum Träger unabhängig ist, zugeordnet ist, und
- die Messeinheit auch umfasst:

* einen Fühler (94) für die Position des Stiftes in einem mit diesem Relaisstein verbundenen Bezugssystem,
* einen Fühler (120) für die Position des Relaissteins in Bezug zum Markstein, und
* einen Umwandler (122) der gemessenen Position des Stiftes, ausgedrückt in dem mit dem Relaisstein verbundenen Bezugssystem, in eine Position in Bezug zum Markstein.

**5.** Vorrichtung nach einem der vorhergehenden Ansprüche, bei der die Messeinheit umfasst:

- mindestens einen Magnetfeldfühler (94) und mindestens eine Magnetfeldquelle (102; 116), wobei einer von Magnetfeldfühler und -quelle in dem Stift angeordnet ist, während der andere in dem Markstein oder dem Relaisstein angeordnet ist, und
- eine Einrichtung zur Bestimmung (33) der Position des Druckkopfes in Bezug zum Markstein oder Relaisstein auf Basis von Messungen des von der Magnetfeldquelle abgestrahlten Magnetfeldes, die vom Fühler durchgeführt wurden.

**6.** Vorrichtung nach Anspruch 5, bei der der Magnetfeldfühler (94) ein Triax-Magnetfeldfühler ist, und die Magnetfeldquelle (102; 116) eine Triax-Magnetfeldquelle ist.

**7.** Vorrichtung nach einem der Ansprüche 1 bis 4, bei der die Messeinheit umfasst:

- mindestens einen Sender (30) und einer Empfänger (32) einen Welle, die geeignet ist, sich zwischen dem Stift und dem Mark- oder Relaisstein auszubreiten, wobei einer von diesem Sender und diesem Empfänger in dem Stift angeordnet ist, während der andere in dem Mark- oder Relaisstein angeordnet ist, und
- eine Einrichtung zur Bestimmung (33) der Position des Druckkopfes in Bezug zum Mark- oder Relaisstein auf Basis der Ausbreitungszeit der Welle zwischen dem Sender und dem Empfänger.

**8.** Verfahren zum Drucken eines Bildes in einer Druckzone, die auf einem materiellen Träger vorgesehen ist, mit Hilfe eines Druckkopfes, der in einem manuell in der Druckzone verschiebbaren Stift angeordnet ist, um auf den Träger einen bestimmten Punkt des Bildes zu drucken, wobei dieses Verfahren umfasst:

- die manuelle Positionierung (52) mindestens eines abnehmbaren Marksteins auf dem Träger, wobei dieser Markstein einem entsprechenden Punkt des zu druckenden Bildes durch ein vordefiniertes Verhältnis, das von der Position dieses Marksteins auf dem Träger unabhängig ist, zugeordnet ist,
- das Messen (56) der Position des Druckkopfes in Bezug zu dem Markstein,
- die Bestimmung (68) des zu druckenden Punktes des Bildes in Abhängigkeit:

* von der aktuellen gemessenen Position des Druckkopfes in Bezug zum Markstein, und
* von dem vordefinierten Verhältnis, das diesem Markstein einen Punkt des Bildes zuordnet,

- die Steuerung des Druckkopfes, um den bestimmten Punkt des Bildes auf den Träger zu drucken, **dadurch gekennzeichnet, dass** das Verfahren die Bestimmung (60) des Abstandes zwischen dem Stift und dem Träger auf Basis der Messung der Position des Druckkopfes und die Verhinderung (64) des Druckens des Bildes auf den Träger, wenn dieser Abstand größer als eine vorbestimmte Schwelle ist, umfasst.

**9.** Verfahren nach Anspruch 8, wobei das Verfahren das Messen der Ausrichtung des Druckkopfes in Bezug zu dem Träger und die Verhinderung des Druckens des Bildes auf den Träger umfasst, wenn die gemessene Ausrichtung des Druckkopfes in Bezug zum Markstein nicht in einem Genehmigungskegel des Tintenausstoßes enthalten ist, der durch einen Winkel an der Spitze und eine vorbestimmte Richtung definiert ist.

10. Verfahren nach Anspruch 8 oder 9, wobei das Verfahren die Messung (58) der Ausrichtung des Stiftes in Bezug zum Träger und die Einstellung der auf den Träger projizierten Tintenmenge in Abhängigkeit von der gemessenen Ausrichtung umfasst.

11. Träger (16) zur Aufzeichnung von Informationen, **dadurch gekennzeichnet, dass** er Befehle für die Durchführung eines Verfahrens nach einem der Ansprüche 8 bis 10 umfasst, wenn diese Befehle durch einen elektronischen Rechner durchgeführt werden.

12. Vorrichtung nach einem der Ansprüche 1 bis 7, deren Stift mit einem Druckkopf (12) ausgestattet ist, der manuell in der Druckzone verschiebbar ist, und mindestens einen Teil der Elemente (30; 94) der Messeinheit einschließt, die geeignet ist, die Position des Druckkopfes in Bezug zum Markstein zu messen, **dadurch gekennzeichnet, dass** der Stift eine Steuereinheit (14) umfasst, die geeignet ist, den Abstand zwischen dem Stift und dem Träger auf Basis der Messung der Position des Druckkopfes zu bestimmen und das Drucken des Bildes auf den Träger zu verhindern, wenn dieser Abstand größer als eine vorbestimmte Schwelle ist.

13. Vorrichtung nach einem der Ansprüche 1 bis 7, **dadurch gekennzeichnet, dass** die Steuereinheit (14) dazu programmiert ist, den Abstand zwischen dem Stift und dem Träger auf Basis der Messung der Position des Druckkopfes zu bestimmen und das Drucken des Bildes auf den Träger zu verhindern, wenn dieser Abstand größer als eine vorbestimmte Schwelle ist.

**Claims**

1. Portable device for printing an image in a print area provided on a material substrate, said device comprising:

- at least one pen (8 ; 92) equipped with a printing head (12) that is manually positionable in the print area,
- at least one removable benchmark (20-23 ; 96-99) manually positionable on the substrate and associated with a corresponding point of the image to be printed by a predefined relationship independent of the position of said benchmark on the substrate,
- a measurement unit for measuring the position of the printing head suitable for measuring the position of the printing head relative to the benchmark,
- a control unit (14) for controlling the printing head and suitable for controlling the printing of a predefined image point on the substrate, said control unit (14) being suitable for determining the image point to be printed according to:

• the real measured position of the printing head relative to the benchmark, and
• the predefined relationship that associates an image point with said benchmark, **characterized in that** the control unit (14) is suitable for determining the distance between the pen and the substrate from the measurement of the position of the printing head and for preventing the printing of the image on the substrate if said distance is greater than a predefined threshold.

2. Device according to Claim 1, in which the measurement unit is also suitable for measuring the orientation of the printing head relative to the benchmark and the control unit (14) is also suitable for controlling the printing head according to said measured orientation.

3. Device according to either of the preceding claims, in which the device comprises:

- at least two benchmarks (20-23 ; 96-99),
- the measurement unit is suitable for measuring the distance between said two benchmarks, and
- the control unit (14) is suitable for determining the image points to be printed also according to the distance measured between said two benchmarks, in order to stretch or shrink the image in proportion to said distance.

4. Device according to any one of the preceding claims, in which:

- the device comprises at least one relay marker (112) manually positionable independently of the benchmark, said relay marker not being associated with an image point by a predefined relationship independent of its position relative to the substrate, and
- the measurement unit also comprises:

• a sensor (94) for detecting the position of the pen in a reference frame integral with said relay marker,
• a sensor (120) for detecting the position of the relay marker relative to the benchmark, and
• a converter (122) for converting the measured position of the pen, expressed in the reference frame integral with the relay marker, to a position relative to the benchmark.

5. Device according to any one of the preceding claims, in which the measurement unit comprises:

- at least one magnetic field sensor (94) and at least one magnetic field source (102 ; 116), either the magnetic field sensor or source being lodged in the pen while the other is lodged in the benchmark or the relay marker, and
- a determinator (33) for determining the position of the printing head relative to the benchmark or relay marker from measurements, taken by the sensor, of the magnetic field radiated by the magnetic field source.

6. Device according to Claim 5, in which the magnetic field sensor (94) is a triaxial magnetic field sensor and the magnetic field source (102 ; 116) is a triaxial magnetic field source.

7. Device according to any one of Claims 1 to 4, in which the measurement unit comprises:

- at least one transmitter (30) and one receiver (32) of a wave suitable for propagating between the pen and the benchmark or relay marker, either said transmitter or said receiver being lodged in the pen while the other is lodged in the benchmark or relay marker, and
- a determinator (33) for determining the position of the printing head relative to the benchmark or relay marker from the wave propagation time between the transmitter and the receiver.

8. Method for printing an image in a print area provided on a material substrate using a printing head lodged in a pen that is manually positionable in the print area for printing a predefined image point on the substrate, said method comprising:

- the manual positioning (52) of at least one removable benchmark on the substrate, said benchmark being associated with a corresponding point of the image to be printed by a predefined relationship independent of the position of said benchmark on the substrate,
- the measurement (56) of the position of the printing head relative to the benchmark,
- the determination (68) of the image point to be printed according to:

• the real measured position of the printing head relative to the benchmark, and
• the predefined relationship which associates an image point with said benchmark,

- the control of the printing head to print the predefined image point on the substrate, **characterized in that** the method comprises the determination (60) of the distance between the pen and the substrate from the measurement of the position of the printing head, and the prevention (64) of the printing of the image on the substrate if said distance is greater than a predefined threshold.

9. Method according to Claim 8, in which the method comprises the measurement of the orientation of the printing head relative to the substrate and the prevention of the printing of the image on the substrate if the measured orientation of the printing head relative to the benchmark is not included in an ink projection authorization cone defined by an apex angle and a predefined direction.

10. Method according to either of Claims 8 and 9, in which the method comprises the measurement (58) of the orientation of the pen relative to the substrate and the adjustment of the quantity of ink projected on the substrate according to the measured orientation.

11. Data recording medium (16), **characterized in that** it comprises instructions for implementing a method according to any one of Claims 8 to 10, when said instructions are implemented by an electronic calculator.

12. Device according to any one of Claims 1 to 7, said pen of which being equipped with a printing head (12) that is manually positionable in the print area and incorporating at least part of the elements (30 ; 94) of the measurement unit suitable for measuring the position of the printing head relative to the benchmark, **characterized in that** the pen comprises a control unit (14) suitable for determining the distance between the pen and the substrate from the measurement of the position of the printing head and for preventing the printing of the image on the substrate if said distance is greater than a predefined threshold.

13. Device according to any one of Claims 1 to 7, **characterized in that** said control unit (14) is programmed for determining the distance between the pen and the substrate from the measurement of the position of the printing head and for preventing the printing of the image on the substrate if said distance is greater than a predefined threshold.

Fig. 1

EP 2 498 996 B1

Fig. 2

Fig. 3

Fig. 4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5861877 A
- US 6808330 B
- DE 102005003333

- WO 2004015980 A
- EP 1502544 A
- FR 0953462